# EUROPEAN PATENT APPLICATION

(11) **EP 1 189 388 A2**
(43) Date of publication of application: **20.03.2002**
(21) Application number: 01121476.4
(22) Date of filing: 07.09.2001
(51) Int. Cl.: H04L 12/28

(54) **Devices, softwares, and methods for wireless devices to form a network on the fly by performing admission control in the second layer**

(30) Priority: 18.09.2000 US 233366 P; 30.03.2001 US 822679
(71) Applicant: Sharp Kabushiki Kaisha, Osaka (JP)
(72) Inventor: Kandala, Srinivas, Vancouver, Washington 98662 (US)
(74) Representative: Müller . Hoffmann & Partner Patentanwälte

(57) **Abstract**

Devices, softwares and methods for wireless devices to form a network on the fly by performing admission control while in the second layer (240), without going to the third layer (250). A peripheral station encodes a priority of data in a tag (286) that is transmitted in a reservation request frame (284). A cooperating complementary access point receives the reservation request frame (284) and reads the tag (286). The request is finally resolved (granted or denied) at the second level (240), using the priority information of the tag (286).

## Description

### CROSS REFERENCE TO RELATED APPLICATIONS

This application claims priority from U.S.A. Provisional Application No. 60/233,366, filed on September 18, 2000, which is hereby incorporated by reference.

### BACKGROUND OF THE INVENTION

### 1. Field of the invention.

The present invention is related to the field of communication through wireless networks, and more specifically to devices, softwares, and methods for wireless devices to form a network on the fly by performing admission control in the second layer, without invoking the network layer.

### 2. Description of the related art.

Local area networks (LANs) are increasingly used to transfer data. A relatively new application is wireless LANs, also known as WLANs. These can provide the benefits of a wired LAN, without requiring the different stations to be physically coupled to each other. There is no need for procuring transmission wires such as coaxial conductors, twisted prayers of wires, optical fibers, etc. for transferring the data. Instead, the data is transferred through space, either using radio frequency (RF) waves (which are also known as microwaves), or optical frequency waves, such as infrared (IR) light. A network may be formed by bringing components close together, without the need to connect transmission wires to them.

Radio based WLANs have several characteristics which differ from those of wired LANs. These characteristics include lower achievable data capacity, which is due to a number of factors. These factors include bandwidth and power limitations, higher error rates, and a communication capacity that changes with time and may depend on the particular source and destination of the transmission. The latter may be due to interfering signals.

A number of characteristics remain the same. One of them is the predominant software architecture for implementing communication. WLANs may use a multilayer communication protocol stack such as the standard open systems interconnection (OSI) management compatible architecture, which is also used for the internet. Much of this architecture is documented in literature produced by the Internet Engineering Task Force (IETF).

An example of the OSI architecture is given below. Unless stated otherwise the terms in this document are to be interpreted consistently with the definitions of the IETF. (IETF maintains a website where the standards may be researched. The website has an address of http://www.ietf.org/ as of the date that this document is initially filed with the USA Patent Office.)

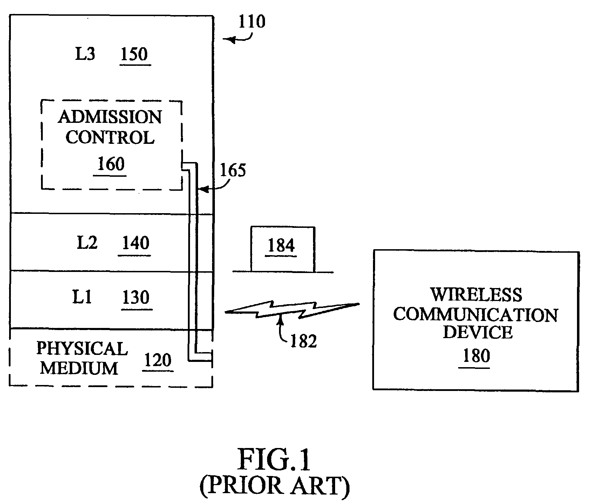

Referring to Fig. 1, an Access Point (AP) device 110 includes a physical medium 120. Medium 120 may be a transmitting antenna, a receiving antenna, etc. Medium 120 is for performing wireless exchange of data with other wireless communication devices in a WLAN.

AP device 110 also includes a software structure that includes a number of layers prescribed by OSI. These layers include a layer L1 130 which is also called a physical layer 130, and is for controlling medium 120. A layer L2 140 is on top of layer L1 130, and a layer L3 150 is on top of layer L2 140. Layer L3 150 is also called network layer 150. Other layers (not shown in Fig. 1) may also be present.

Another characteristic that remains the same is the need to prevent many peripheral stations from transmitting at once. Concurrent transmission would, if permitted, corrupt the data being received.

Concurrent transmission is typically avoided by polling techniques, once a communication scheme has been established. In such polling techniques, peripheral stations transmit in response to being polled by AP device 110. In this way, multiple stations are prevented from transmitting concurrently.

For establishing the communication scheme, requests are received from contending peripheral devices. These are requests for reserving resources, such as bandwidth and memory, and are therefore also known as reservation requests.

Continuing to refer to Fig. 1, network layer 150 includes an admission control module 160. Module 160 receives each reservation request, examines it, and then grants or denies it. When it grants it, a network has been formed on the fly.

In addition, AP device 110 includes a path 165 that starts from physical medium 120, goes through physical layer L1 130, layer L2 140, and ends in admission control module 160. Path 165 is an iconic way of depicting the fact that a physical signal received by physical medium 120 is converted into a software signal as it is ushered in layers L1 130, L2 140, L3 150, etc.

A first wireless peripheral communication device 180 may be wishing to transmit data to AP device 110. Accordingly, wireless communication device 180 transmits data group 184 to AP device 110 over a communication link 182.

Data group 184 is a reservation request frame that contains an encoded reservation request. The reservation request is transferred along path 165, where it is received in admission control module 160. Admission control module 160 then determines whether to grant or deny the requested reservation.

A problem remains where reservation requests are conflicting, by asking for the resource at the same time. Various approaches for WLANs have been proposed for resolving conflicting reservation requests. They use techniques including random access, in which each wireless station is allocated a portion of the total available communication capacity. For example, the IEEE 802.11 media access control standard is a random access technique, which uses a carrier sense with a collision avoidance (CSMA/CA) scheme.

Devices that are compatible with the IEEE 802 standard are also known as type 802 devices. They face the problem that the reservation request must include data that makes it specific to level L3 150. This renders the reservation request too long, which delays in setting up a communication scheme.

### BRIEF SUMMARY OF THE INVENTION

The present invention overcomes these problems and limitations of the prior art.

Generally, the present invention provides devices, softwares and methods for wireless devices to form a network on the fly by performing admission control while in the second layer.

A peripheral station according to the invention encodes a priority of data in a tag that is transmitted in a reservation request frame. A cooperating complementary access point receives the reservation request frame and reads the tag. The request is finally resolved (granted or denied) at the second level, using the priority information of the tag.

The invention offers the advantage that the admission control process need not reach the network layer of the access point. As such, the reservation request frame need not be specific to the third level of the access point. This way the reservation request frame may be shorter.

The invention will become more readily apparent from the following Detailed Description, which proceeds with reference to the drawings, in which:

### BRIEF DESCRIPTION OF THE DRAWINGS

Fig. 1 is a diagram of an architecture of an AP device in the prior art resolving a reservation request from a peripheral station.

Fig. 2 is a diagram of architectures for an AP device made according to an embodiment of the invention that resolves a reservation request, and for a cooperating peripheral station made according to an embodiment of the present invention that generates reservation request.

Fig. 3 is a block diagram of components of the access point and the peripheral station of Fig. 2.

Fig. 4 is a block diagram illustrating different embodiments for a wireless access point and a wireless base station according to the invention.

Fig. 5 is a flowchart illustrating a method according to an embodiment of the present invention.

Fig. 6 is a flowchart illustrating a method according to an embodiment of the present invention.

### DETAILED DESCRIPTION OF THE PREFERRED EMBODIMENT(S)

As has been mentioned, the present invention provides devices, softwares and methods for wireless devices to perform admission control while in the second layer. The invention is now described in more detail.

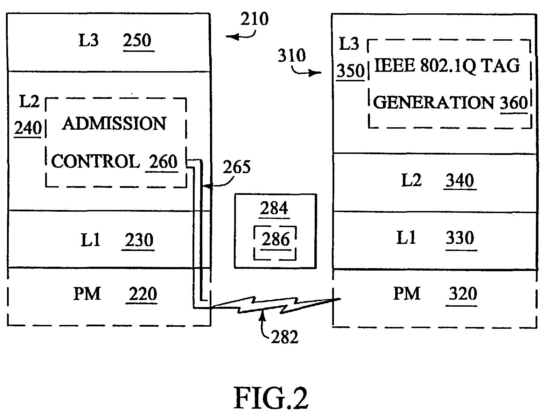

Referring now to Fig. 2, an access point (AP) device 210 made according to the invention is described. AP device 210 includes a physical medium 220. Medium 220 may be a transmitting antenna, a receiving antenna, etc. Medium 220 is for performing wireless exchange of data with other wireless communication devices in a WLAN.

AP device 210 also includes a software structure that includes a number of layers prescribed by OSI. These layers include a layer L1 230 that is also called a physical layer 230, and is for controlling medium 220. A layer L2 240 is on top of layer L1 230, and a layer L3 250 is on top of layer L2 240, and is also called network layer L3 250. Other layers (not shown in Fig. 2) may also be present.

Layer L2 240 typically includes a MAC sublayer (not shown separately in Fig. 2). The importance of the MAC sublayer is such that sometimes the entire second layer L2 24 is called a medium access control (MAC) layer.

Layer L2 240 includes an admission control module 260. Module 260 receives each reservation request, and determines whether to grant or deny it.

In addition, AP device 210 includes a path 265 that starts from physical medium 220, goes through physical layer 230, and ends in admission control module 260. Path 265 is an iconic way of depicting the fact that a physical signal received by physical medium 220 is converted into a software signal as it is ushered in layers L1 230, L2 240, etc.

Physical signals are received over a communication link 282, established with a peripheral device 310. A physical signal includes a reservation request frame 284. The reservation request (RR) is encoded in reservation request frame 284.

A tag 286 is encoded within reservation request frame 284. Tag 286 has been encoded according to the IEEE 802.11 standard by device 310.

Importantly, according to the invention, tag 286 is used to additionally encode a priority of the data that is to be transmitted from device 310. Admission control module 260 makes its determination by interpreting the priority encoded in tag 286.

Peripheral station device 310 is also made according to the invention. Device 310 includes a physical medium 320. Medium 320 may be a transmitting antenna, a receiving antenna, etc. Medium 320 is for performing wireless exchange of data with other wireless communication devices in a WLAN.

Device 310 also includes a software structure that includes a number of layers prescribed by OSI. These layers include a layer L1 330 that is also called a physical layer 330, and is for controlling medium 320. A layer L2 340 is on top of layer L1 330, and a layer L3 350 is on top of layer L2 340, and is also called network layer L3 350. Other layers (not shown in Fig. 2) may also be present.

Importantly, layer L3 350 includes a tag generation module 360. Module 360 generates tag 286 according to the IEEE 802.1Q standard, defined as of the day this document is initially submitted to the USA Patent Office. In addition, tag 286 includes a priority of the data that is to be transmitted along link 282. As such, the priority will be finally resolved based on QoS considerations.

As can be seen, the reservation request is resolved by admission control module 260 at layer L2 240. Accordingly, the reservation request need not comply with any requirements of layer L3 250. In other words, the RR may be higher level agnostic.

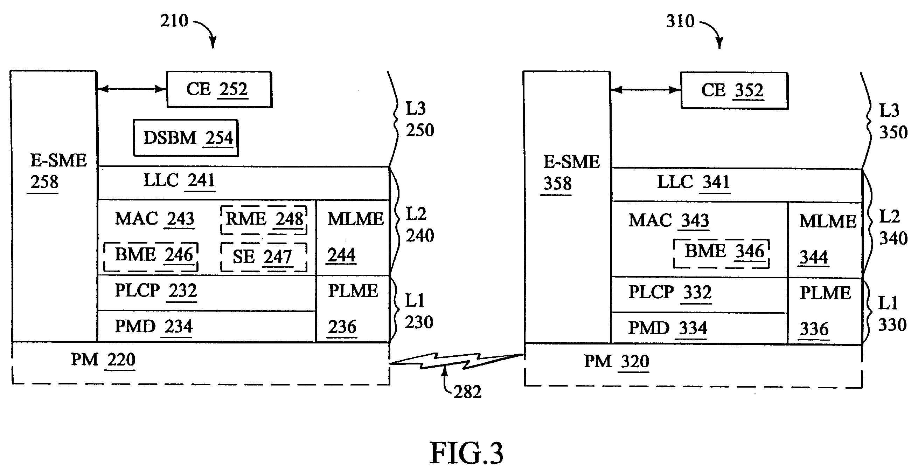

Referring now to Fig. 3, components of the devices of Fig. 2 are seen in more detail. This art involves many standardized terms, and acronyms according to the terms. Still, for the benefit of the reader, a list of the most useful acronyms is given below.
AP - Access Point
BME - Buffer Management Entity
CCI - Centralized Contention Interval
CE - Classification Entity
CTS - Clear To Send
DCF - Distribution Coordination Function
DSBM - Designated Subnet Bandwidth Manager
E-SME - Enhanced Station Management Entity
LLC - Logic Link Control
MAC - Medium Access Control
MLME - MAC Layer Management Entity
PCF - Point Coordination Function
PE - Policing Entity
PLCP - Physical Layer Convergence Protocol
PLME - Physical Layer Management Entity
PM - Physical Medium
PMD - Physical Medium Dependent
QoS - Quality of Service
RR - Reservation Request
SE - Scheduling Entity
STA - Station

As can be seen in Fig. 3, in AP device 210, layer L1 230 includes a PLCP 232, a PMD 234 and a PLME 236. Layer L2 240 includes a LLC 241, a Medium Access Control (MAC) sublayer 243, and a MLME 244. MAC sublayer 243 includes a BME 246, a SE 247 and a RME 248. Layer L3 250 includes, among others, a CE 252 and a DSBM 254. All three layers L1 230, L2 240 and L3 250 are spanned by an E-SME 258.

In addition, in peripheral station 310, layer L1 330 includes a PLCP 332, a PMD 334 and a PLME 336. Layer L2 340 includes a LLC 341, a Medium Access Control (MAC) sublayer 343, and a MLME 344. Layer L2 340 is also called a medium access control (MAC) layer, because it includes MAC sublayer 343. MAC sublayer 343 includes a BME 346. Layer L3 350 includes, among others, a CE 352. Classification entity (CE) 352 is preferably the tag generation module 360 of Fig. 2. All three layers L1 330, L2 340 and L3 350 are spanned by an E-SME 358.

It is readily apparent that the present invention may be implemented by one or more devices that include logic circuitry. It may also be implemented by a device that includes a dedicated processor system, which may include a microcontroller or a microprocessor. Examples of such alternate embodiments are seen below.

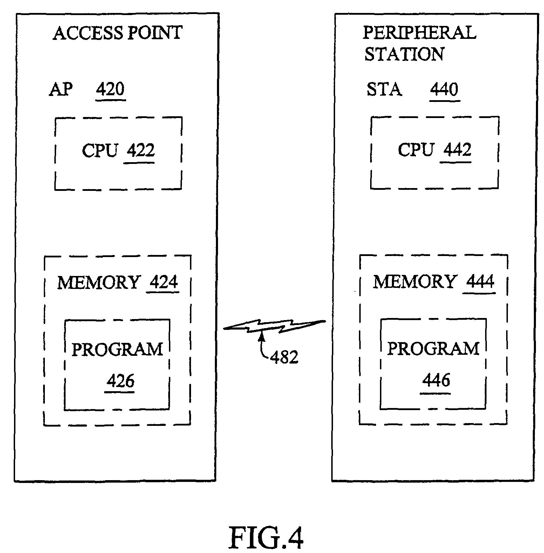

Referring now to Fig. 4, an Access Point AP 420 made according to an embodiment of the invention is described in more detail. AP 420 may be any communication device, such as a wireless communication device (a station, a peripheral, etc.)

Access Point AP 420 has a processor 422, which may be implemented as a Digital Signal Processor (DSP), Central Processing Unit (CPU), or any other equivalent way known in the art.

Access Point AP 420 additionally includes a memory 424, on which a program 426 may reside. Functions of processor 422 may be controlled by program 426, as will become apparent from the below.

Continuing to refer to Fig. 4, a peripheral station STA 440 made according to an embodiment of the invention is described in more detail. Station STA 440 may be any communication device, such as a wireless communication device (a station, a peripheral, etc.)

Station STA 440 has a processor 442, which may be implemented as a Digital Signal Processor (DSP), Central Processing Unit (CPU), or any other equivalent way known in the art.

Station STA 440 additionally includes a memory 444, on which a program 446 may reside. Functions of processor 442 may be controlled by program 446, as will become apparent from the below.

Access Point AP 420 and peripheral station STA 440 may establish a communication connection link 482, for exchanging data between them.

The invention additionally provides methods, which are described below. Moreover, the invention provides apparatus that performs, or assists in performing the methods of the invention. This apparatus may be specially constructed for the required purposes, or it may comprise a general-purpose computer selectively activated or reconfigured by a computer program stored in the computer. The methods and algorithms presented herein are not necessarily inherently related to any particular computer or other apparatus. In particular, various general-purpose machines may be used with programs in accordance with the teachings herein, or it may prove more convenient to construct more specialized apparatus to perform the required method steps. The required structure for a variety of these machines will appear from this description.

Useful machines or articles for performing the operations of the present invention include general-purpose digital computers or other similar devices. In all cases, there should be borne in mind the distinction between the method of operating a computer and the method of computation itself. The present invention relates also to method steps for operating a computer and for processing electrical or other physical signals to generate other desired physical signals.

The invention additionally provides a program, and a method of operation of the program. The program is most advantageously implemented as a program for a computing machine, such as a general-purpose computer, a special purpose computer, a microprocessor, etc.

The invention also provides a storage medium that has the program of the invention stored thereon. The storage medium is a computer-readable medium, such as a memory, and is read by the computing machine mentioned above.

A program is generally defined as a sequence of steps leading to a desired result. These steps, also known as instructions, are those requiring physical manipulations of physical quantities. Usually, though not necessarily, these quantities take the form of electrical or magnetic signals capable of being stored, transferred, combined, compared, and otherwise manipulated or processed. When stored, they may be stored in any computer-readable medium. It is convenient at times, principally for reasons of common usage, to refer to these signals as bits, data bits, samples, values, elements, symbols, characters, images, terms, numbers, or the like. It should be borne in mind, however, that all of these and similar terms are associated with the appropriate physical quantities, and that these terms are merely convenient labels applied to these physical quantities.

This detailed description is presented largely in terms of flowcharts, display images, algorithms, and symbolic representations of operations of data bits within a computer readable medium, such as a memory. Such descriptions and representations are the type of convenient labels used by those skilled in programming and/or the data processing arts to effectively convey the substance of their work to others skilled in the art. A person skilled in the art of programming may use this description to readily generate specific instructions for implementing a program according to the present invention. For the sake of economy, however, flowcharts used to describe methods of the invention are not repeated in this document for describing software according to the invention.

Often, for the sake of convenience only, it is preferred to implement and describe a program as various interconnected distinct software modules or features, collectively also known as software. This is not necessary, however, and there may be cases where modules are equivalently aggregated into a single program with unclear boundaries. In any event, the software modules or features of the present invention may be implemented by themselves, or in combination with others. Even though it is said that the program may be stored in a computer-readable medium, it should be clear to a person skilled in the art that it need not be a single memory, or even a single machine. Various portions, modules or features of it may reside in separate memories, or even separate machines. The separate machines may be connected directly, or through a network, such as a local access network (LAN), or a global network, such as the Internet.

In the present case, methods of the invention are implemented by machine operations. In other words, embodiments of the program of the invention are made such that they perform methods of the invention that are described in this document. These may be optionally performed in conjunction with one or more human operators performing some, but not all of them. As per the above, the users need not be collocated with each other, but each only with a machine that houses a portion of the program. Alternately, some of these machines may operate automatically, without users and/or independently from each other.

Methods of the invention are now described.

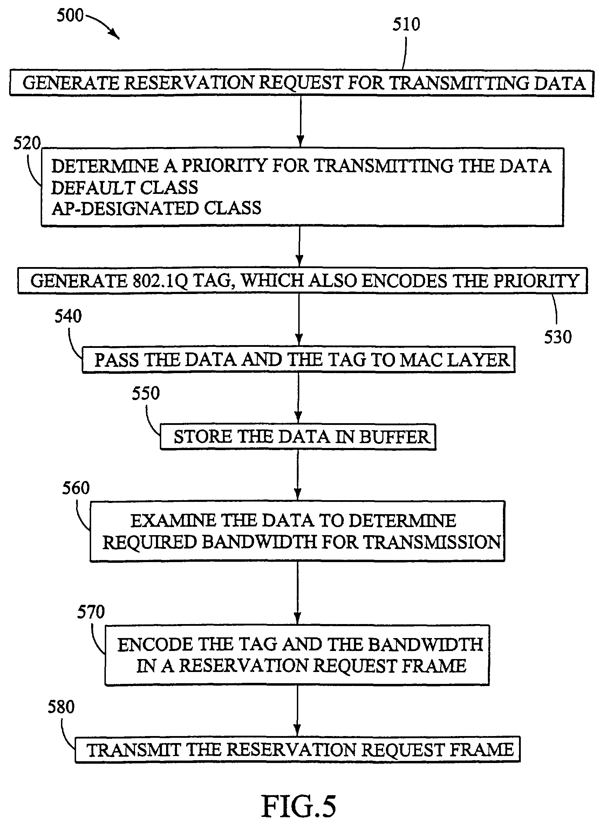

Referring now to Fig. 5, a flowchart 500 is used to illustrate a method according to an embodiment of the invention. The method of flowchart 500 may be practiced by a peripheral station seeking to transmit data to an Access Point device.

According to a box 510, a reservation request is generated for transmitting data.

According to a next box 520, a priority is determined for transmitting the data. The priority may be determined through a Classification Entity. The priority may be either according to a default class, or according to an AP-designated class. In such classes, the priority may be designated by a number, such as 7, 6, 4, etc.

According to a next box 530, a tag is generated. The tag is according to the IEEE 802.1Q standard. Importantly, the tag also encodes the priority.

According to a next box 540, the data and the tag are passed to the second layer of the OSI architecture, which is often called the MAC sublayer. If an LLC intervenes, the data is passed to the MAC sublayer.

According to an optional next box 550, the data is stored in a buffer.

According to a next box 560, the data is examined to determine a required bandwidth for transmission. The address is also examined. Examination is preferably by a BME.

According to an optional next box 570, the tag and the bandwidth are encoded in a reservation request frame. The reservation request frame need not be specific to any type of a network layer of the access point. In other words, it may be 3rd layer independent, or 3rd layer agnostic.

According to an optional next box 580, the reservation request frame is transmitted, so that it will be received by the AP device. Transmission is preferably during a Centralized Contention Interval. Transmission may be in the DCF mode or in the PCF mode.

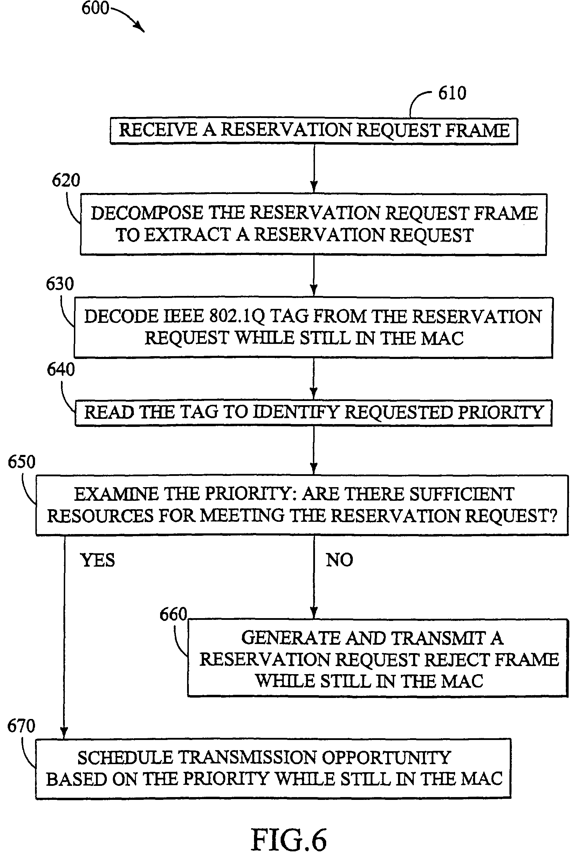

Referring now to Fig. 6, a flowchart 600 is used to illustrate a method according to another embodiment of the invention. The method of flowchart 600 may be practiced by an access point device that receives and resolves reservation requests.

According to a box 610, a reservation request frame is received.

According to a next box 620, the reservation request frame is decomposed to extract a reservation request.

According to a next box 630, an IEEE 802.1Q tag is decoded from the reservation request. Decoding is performed while in the MAC layer, without advancing to the network layer. This is a first part of admission control.

According to an optional next box 640, the tag is read to identify requested priority. Additionally, the reservation request is also read to further determine a bandwidth requirement. These are second parts of admission control.

According to an optional next box 650, the priority is examined. It is inquired whether there are sufficient resources for meeting the reservation request. The request is examined against the available resources.

If not, then according to a next box 660, a reservation request reject frame is generated and transmitted. This takes place while still in the MAC layer.

If yes, then according to a next box 670, a transmission opportunity is scheduled based on the priority. This scheduling is performed while still in the MAC layer. In the preferred embodiment, the scheduling is performed by a scheduling entity (SE) in the second layer. Then an exchange takes place, to announce the scheduling, the size of buffer window, etc.

Accordingly, regardless of the outcome, admission control is thus performed exclusively in the second layer. This involves also a BME and a RME in the second layer.

A person skilled in the art will be able to practice the present invention in view of the description present in this document, which is to be taken as a whole. Numerous details have been set forth in order to provide a more thorough understanding of the invention. In other instances, well-known features have not been described in detail in order not to obscure unnecessarily the invention.

While the invention has been disclosed in its preferred form, the specific embodiments as disclosed and illustrated herein are not to be considered in a limiting sense. Indeed, it should be readily apparent to those skilled in the art in view of the present description that the invention may be modified in numerous ways. The inventor regards the subject matter of the invention to include all combinations and subcombinations of the various elements, features, functions and/or properties disclosed herein.

The following claims define certain combinations and subcombinations, which are regarded as novel and non-obvious. Additional claims for other combinations and subcombinations of features, functions, elements and/or properties may be presented in this or a related document.

## Claims

1. A wireless communication device (310) comprising:
a physical layer (330) adapted to transmit a reservation request (RR) about an impending transmission of data;
a second layer (340) on top of the physical layer (330), the second layer (340) adapted to generate a tag (286) about the impending transmission and impart the tag (286) in the RR; and
a network layer (350) on top of the second layer (340),
wherein the network layer (350) includes a tag generation module (360) for encoding in the tag (286) a priority of the impending transmission.

2. A wireless communication device comprising:
a physical layer (230) adapted to receive a reservation request (RR);
a second layer (240) on top of the physical layer (230), the second layer (240) adapted to receive the RR from the physical layer (230); and
a network layer (250) on top of the second layer (240),
wherein the second layer (240) is adapted to process and finally resolve the received RR without accessing the network layer.

3. The device of claim 2, wherein
the second (240) layer includes a Buffer Management Entity (BME) (246), a Resource Management Entity (RME) (248) and a Scheduling Entity (SE) (247).

4. The device of claim 2, wherein
the second layer (240) reads a tag (286) from the RR to determine a priority.

5. The device of claim 2, wherein
the second layer (240) is adapted to process and finally resolve the RR based on Quality of Service (QoS) considerations.

6. A device comprising:
a physical medium (320); and
a processor coupled with the physical medium (320), wherein the processor is adapted to
generate a reservation request for transmitting data;
determine a priority for transmitting the data;
generate a tag (286) that encodes the priority;
pass the data and the tag (286) to a medium access control layer (343); examine the data to determine a required bandwidth for transmission;
encode the tag (286) and the bandwidth in a reservation request frame (284); and
then transmit the reservation request frame (284).

7. The device of claim 6, wherein the processor is further adapted to:
store the data in a buffer after passing it and prior to examining it.

8. The device of claim 6, wherein
the priority is determined based on one of a default class and an AP-designated class.

9. A device comprising:
a physical medium (220); and
a processor coupled with the physical medium (220), wherein the processor is adapted to
receive a reservation request frame (284);
decompose the reservation request frame (284) to extract a reservation request;
decode a tag (286) from the reservation request while in the medium access control layer (243);
read the tag (286) to identify a priority while in the medium access control layer (243);
examine the priority against available resources while in the medium access control layer (243); and
finally resolve the reservation request in terms of the examined priority while still in the medium access control layer (243).

10. The device of claim 9, wherein the processor is adapted to resolve the reservation request by:
determining that there are insufficient resources for meeting the reservation request; and
generating and transmitting a Reservation Request Reject frame.

11. The device of claim 9, wherein the processor is adapted to resolve the reservation request by:
scheduling a transmission opportunity based on the priority.

12. An article comprising: a storage medium, said storage medium having stored thereon instructions, that, when executed by at least one device, result in:
generating a reservation request for transmitting data;
determining a priority for transmitting the data;
generating a tag (286) that encodes the priority;
passing the data and the tag (286) to a medium access control layer (343); examining the data to determine a required bandwidth for transmission; encoding the tag (286) and the bandwidth in a reservation request frame (284); and
then transmitting the reservation request frame (284).

13. The article of claim 12, wherein the instructions further result in:
storing the data in a buffer after passing it and prior to examining it.

14. The article of claim 12, wherein
the priority is determined based on one of a default class and an AP-designated class.

15. An article comprising: a storage medium, said storage medium having stored thereon instructions, that, when executed by at least one device, result in:
receiving a reservation request frame (284);
decomposing the reservation request frame (284) to extract a reservation request;
decoding a tag (286) from the reservation request while in the medium access control layer (343);
reading the tag (286) to identify a priority while in the medium access control layer (243);
examining the priority against available resources while in the medium access control layer (243); and
finally resolving the reservation request in terms of the examined priority while still in the medium access control layer (243).

16. The article of claim 15, wherein the instructions result in resolving by:
determining that there are insufficient resources for meeting the reservation request; and
generating and transmitting a Reservation Request Reject frame.

17. The article of claim 15, wherein the instructions result in resolving by:
scheduling a transmission opportunity based on the priority.

18. A method comprising:
generating a reservation request for transmitting data;
determining a priority for transmitting the data;
generating a tag (286) that encodes the priority;
passing the data and the tag to a medium access control layer (343); examining the data to determine a required bandwidth for transmission; encoding the tag (286) and the bandwidth in a reservation request frame (284); and
then transmitting the reservation request frame.

19. The method of claim 18, further comprising:
storing the data in a buffer after passing it and prior to examining it.

20. The method of claim 18, wherein
the priority is determined based on one of a default class and an AP-designated class.

21. A method comprising:
receiving a reservation request frame (284);
decomposing the reservation request frame (284) to extract a reservation request;
decoding a tag (286) from the reservation request while in the medium access control layer (243);
reading the tag (286) to identify a priority while in the medium access control layer (243);
examining the priority against available resources while in the medium access control layer (243); and
finally resolving the reservation request in terms of the examined priority while still in the medium access control layer (243).

22. The method of claim 21, wherein resolving includes:
determining that there are insufficient resources for meeting the reservation request; and
generating and transmitting a Reservation Request Reject frame (284).

23. The method of claim 21, wherein resolving includes:
scheduling a transmission opportunity based on the priority.
